(19) Europäisches Patentamt
European Patent Office
Office européen des brevets

(11) Veröffentlichungsnummer: **0 405 101 A1**

(12) **EUROPÄISCHE PATENTANMELDUNG**

(21) Anmeldenummer: **90108776.7**

(51) Int. Cl.⁵: **C09B 62/085**, C09B 62/51

(22) Anmeldetag: **10.05.90**

(30) Priorität: **23.05.89 DE 3916662**

(43) Veröffentlichungstag der Anmeldung:
**02.01.91 Patentblatt 91/01**

(84) Benannte Vertragsstaaten:
**CH DE FR GB LI**

(71) Anmelder: **BAYER AG**

**D-5090 Leverkusen 1 Bayerwerk(DE)**

(72) Erfinder: **Jäger, Horst, Dr.**
**Carl-Rumpff-Strassse 37**
**D-5090 Leverkusen(DE)**
Erfinder: **Arlt, Dieter, Prof. Dr.**
**Rybnikerstrasse 2**
**D-5000 Köln 80(DE)**

(54) **Reaktivfarbstoffe.**

(57) Reaktivfarbstoffe der Formel

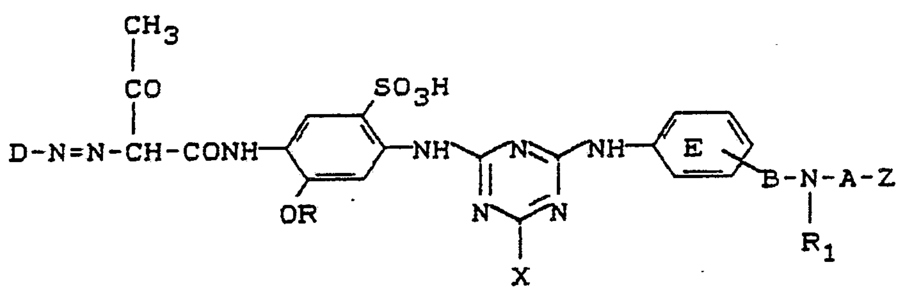

(1)

mit den in der Beschreibung angegebenen Substituentenbedeutungen eignen sich hervorragend zum Färben und Bedrucken von hydroxylgruppen- und amidgruppenhaltigen Materialien.

EP 0 405 101 A1

## REAKTIVFARBSTOFFE

Gegenstand der Erfindung sind Reaktivfarbstoffe der Formel

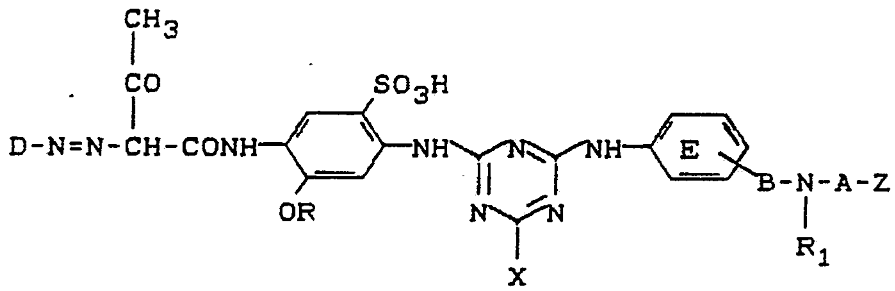

(1)

worin

D = durch $C_1$-$C_4$-alkyl, $C_1$-$C_4$-alkoxy, Phenoxy, $C_1$-$C_4$-alkylcarbonylamino, Benzoylamino, Carboxybenzoylamino, Sulfophenylazo oder Sulfonaphthylazo substituiertes sulfogruppenhaltiges Phenyl, oder Di-bzw Trisulfonaphthyl oder

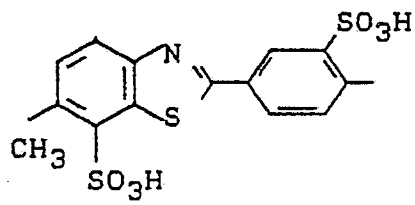

X = F, Cl, gegebenenfalls substituierter Pyridinium-Rest (Substituenten insbesondere gegebenenfalls substituiertes $C_1$-$C_4$-Alkyl, COOH, $SO_3H$, CN, Carbonamid)
R = $CH_3$, $C_2H_5$
B = Brückenglied, insbesondere CO, $SO_2$ oder NHCO
$R_1$ = H oder gegebenenfalls substituiertes $C_1$-$C_4$-alkyl
A = gegebenenfalls substituiertes Phenylen oder Naphthylen
Z = $SO_2CH=CH_2$ oder $SO_2CH_2CH_2Y$, wobei Y eine unter alkalischen Bedingungen abspaltbare Gruppe bedeutet und der Benzolring E substituiert sein kann.

Beispiele für Substitutenten der Phenylen- oder Naphthylenreste A sind $CH_3$, $C_2H_5$, $OCH_3$, $OC_2H_5$, Cl, Br, COOH, $SO_3H$ und OH. Folgende Reste A seien aufgeführt.

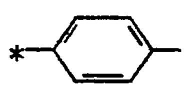 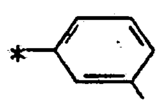 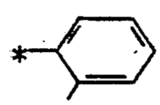 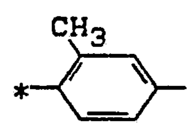

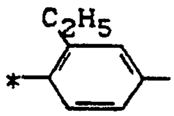 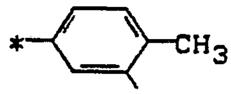 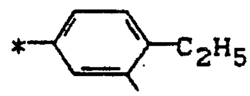

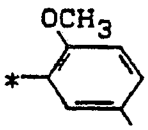 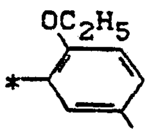 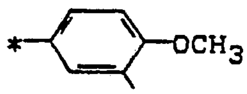 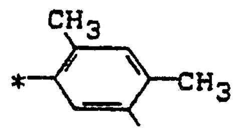

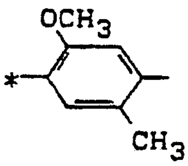 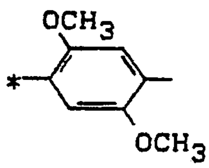 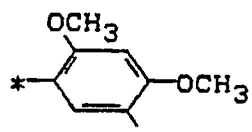 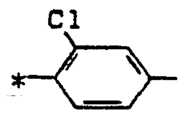

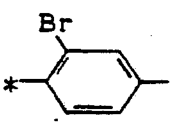 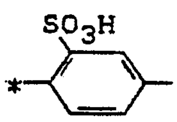 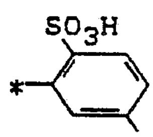 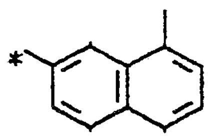 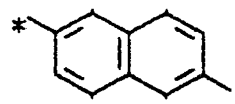

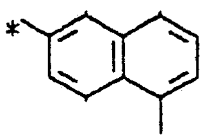 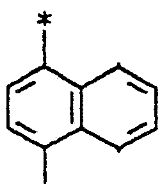 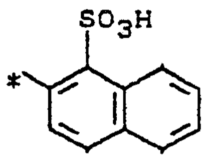 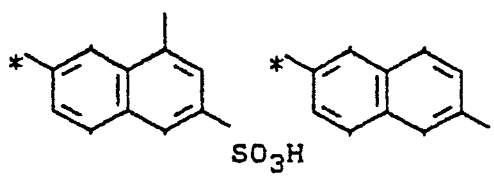

In den Formeln ist die mit einem Stern gekennzeichnete Bindung an

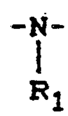

geknüpft.

Als Beispiele für Substituenten von $R_1$ sind folgende genannt: OH, $OCH_3$, Cl, COOH, CN, $OSO_3H$, $SO_3H$.

Abspaltbare Gruppen Y sind beispielsweise folgende:
$OSO_3H$, $OPO_3H_2$, $S_2O_3H$, Cl, $OCOCH_3$.

Beispiele für Substituenten von E sind:
Cl, $CH_3$, $OCH_3$, COOH.

Bevorzugte Farbstoffe sind generell solche mit X = F

Im Rahmen der Formel (1) sind Farbstoffe bevorzugt, in denen
R = $CH_3$
B = CO
$R_1$ = H

A = 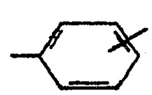

Z = $SO_2CH_2CH_2OSO_3H$ oder $SO_2CH = CH_2$ und der Ring E unsubstituiert ist.

Weiterhin sind solche bevorzugt, in denen D für

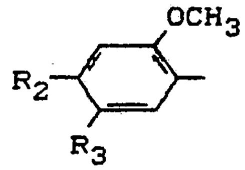

steht, worin $R_2$ oder $R_3$ eine Sulfogruppe bedeutet und der andere Substituent $R_2$ oder $R_3$ für $CH_3$, $OCH_3$, $C_2H_5$, $OC_2H_5$ oder H steht;
weiterhin solche, in denen D für

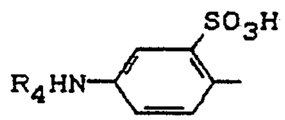

steht, worin
$R_4$ Acetyl, Propionyl, Maleinyl oder Succinyl bedeutet; weiterhin solche, in denen D für

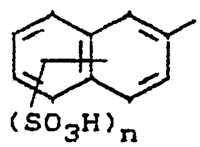

steht,
worin n = 2 oder 3.
Besonders bevorzugte Verbindungen entsprechen der Formel

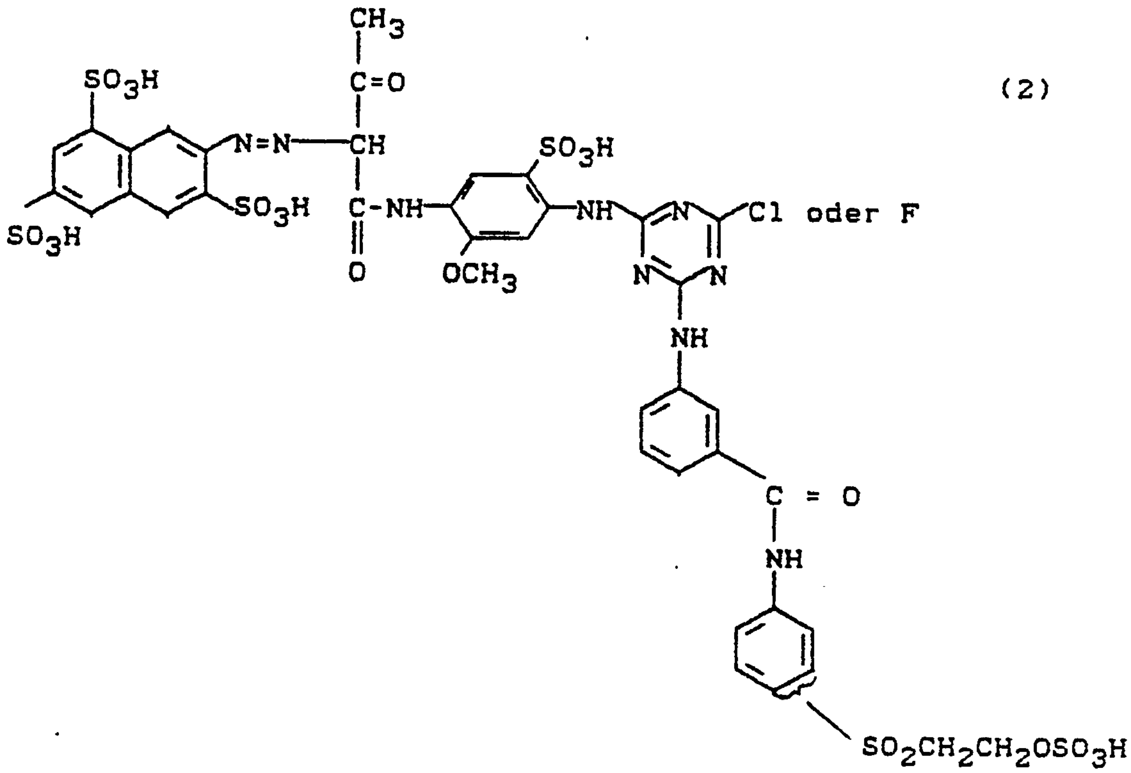

(2)

Beispiele für Reste D sind folgende:

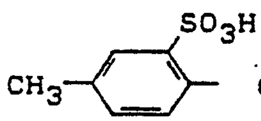 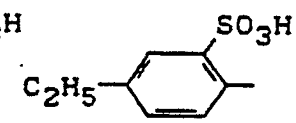 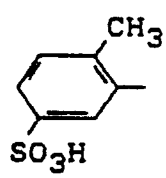 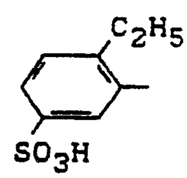

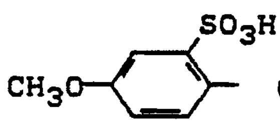 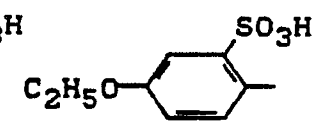 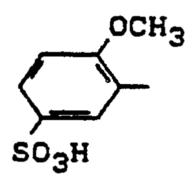 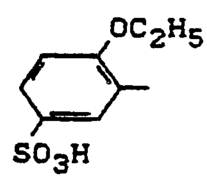

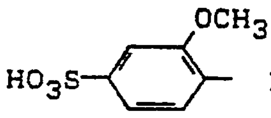
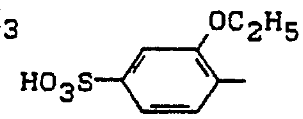
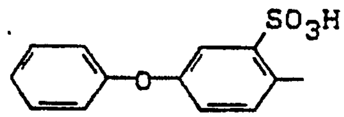

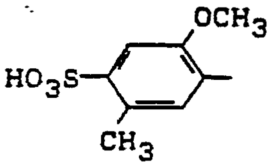
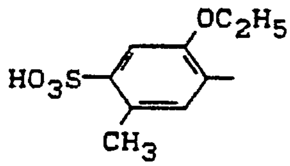
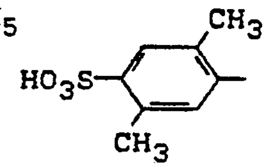
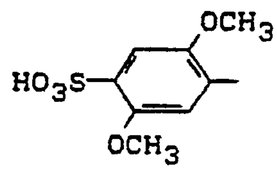

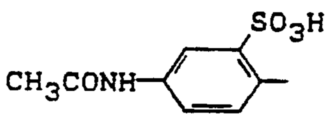
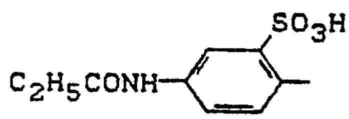

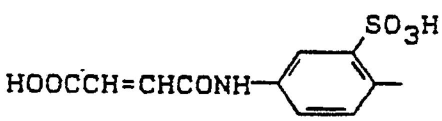
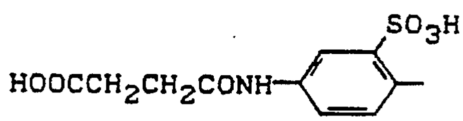

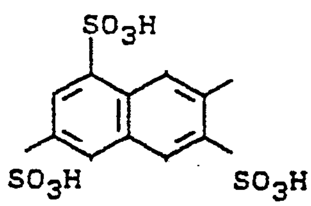
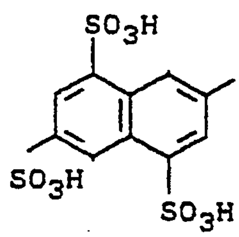
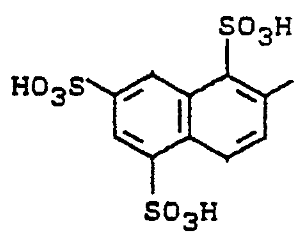

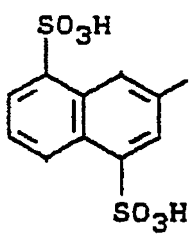
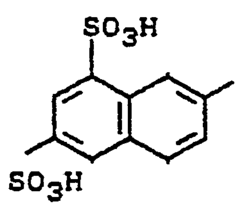
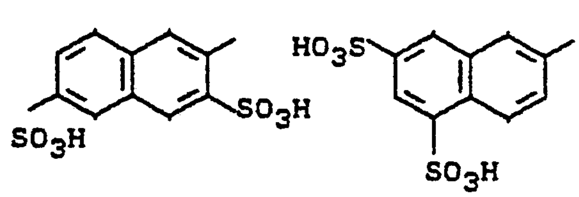

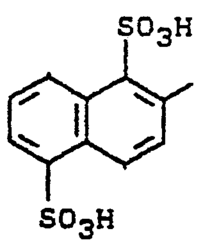
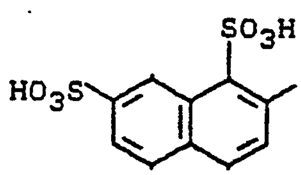

Von diesen sind folgende bevorzugt:

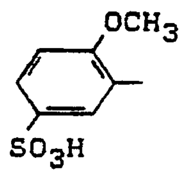
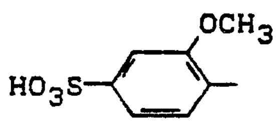
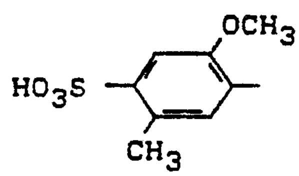

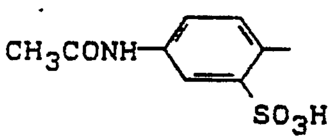
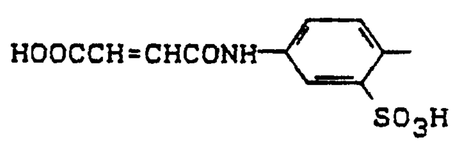

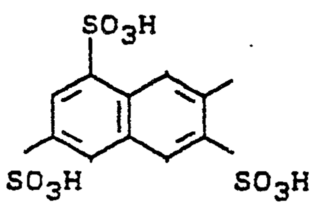
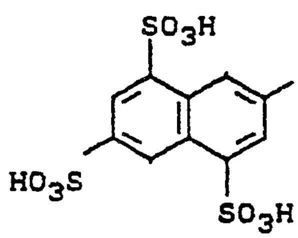
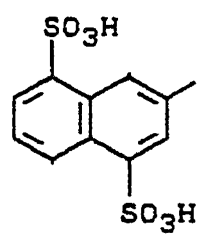
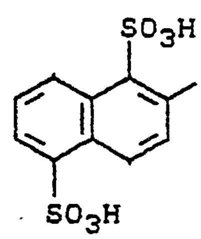

Gegenstand der Erfindung sind gleichfalls Verfahren zur Herstellung von Azofarbstoffen (1).

1. Cyanurchlorid oder Cyanurfluorid wird mit einem Azofarbstoff der Formel

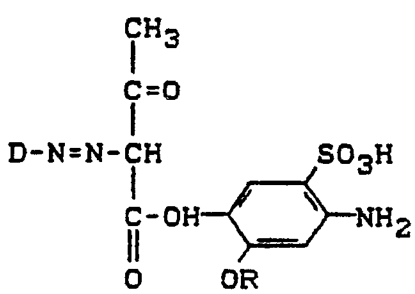
(3)

unter Abspaltung von HCl oder HF kondensiert und das Kondensationsprodukt der Formel (4)

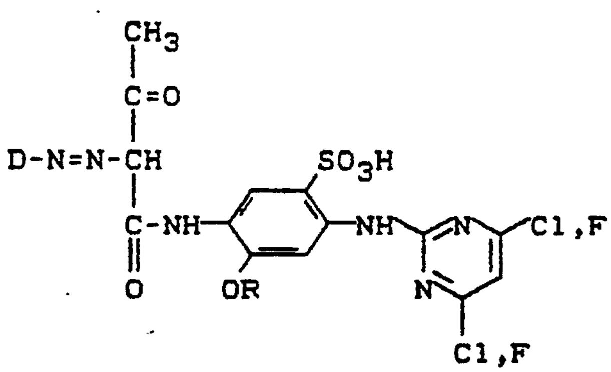
(4)

mit einem Amin der Formel

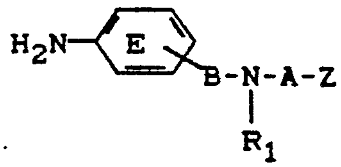

(5)

unter Abspaltung von HCl oder HF zu einem Farbstoff (1) umgesetzt.
2. Cyanurchlorid oder Cyanurfluorid wird mit einem Acetessigsäurearylid der Formel

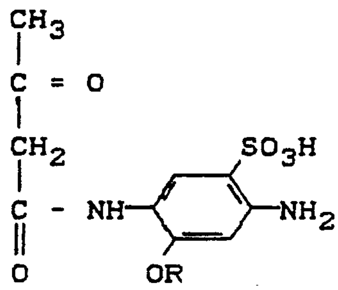

(6)

unter Abspaltung von HCl oder HF zu einer Verbindung der Formel

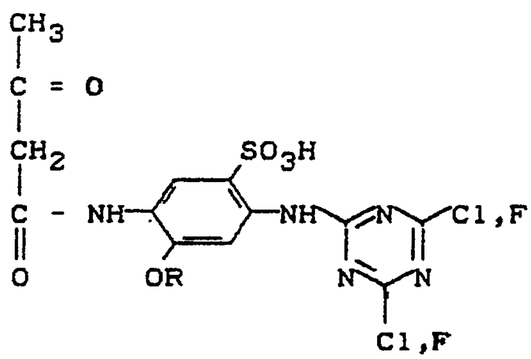

(7)

kondensiert und diese mit einem Amin (5) unter Abspaltung von HCl oder HF zu einem Acetessigsäurearylid der Formel

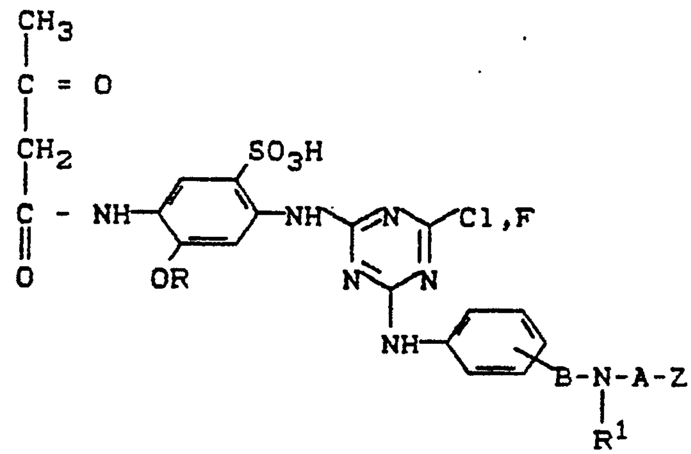

(8)

umgesetzt, das dann mit der Diazoverbindung eines Amins der Formel

D - $NH_2$ (9)

zu einem Farbstoff (1) gekuppelt wird.

3. Ein 'Acetessigsäurearylid (7) wird mit der Diazoverbindung eines Amins (9) zu einem Farbstoff (4) gekuppelt und dieser dann mit einem Amin (5) zu einem Farbstoff (1) umgesetzt.

4. Cyanurchlorid oder Cyanurfluorid wird mit einem Amin (5) zu einem Kondensationsprodukt der Formel

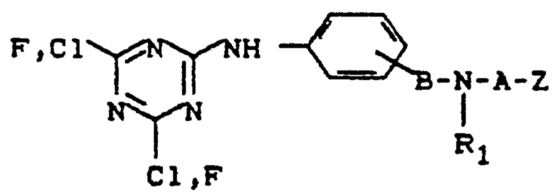

(10)

unter Abspaltung von HCl oder HF kondensiert und dieses mit einem Azofarstoff (3) unter Abspaltung von HCl oder HF zu einem Farbstoff (1) umgesetzt.

5. Ein Amin (10) wird zunächst mit einem Acetessigsäurearylid (6) zu einer Verbindung (8) unter Abspaltung von HCl oder HF kondensiert und daraus in der unter 2. beschriebenen Weise (1) erhalten

Azofarbstoffe (3) erhält man durch Kuppeln eines diazotierten Amins (9) mit einer Kupplungskomponente (6). Die Kupplung der diazotierten Amine (9) mit den Kupplungskomponenten (6), (7) oder (8) erfolgt in wässriger Phase, bei 0° bis 20° und im schwach sauren bis neutralen pH-Bereich.

Die Kondensation von (3), (5) oder (6) mit Cyanurchlorid bzw. Cyanurfluorid wird im allgemeinen in wässriger Phase bei 0° bis 20° und im schwach sauren bis neutralen pH-Bereich ausgeführt. Die bei der Kondensation freiwerdende Salzsäure oder Flußsäure wird vorzugsweise durch Zugabe von Alkali- oder Erdalkalihyroxiden,-carbonaten, -hydrogencarbonaten oder- phosphaten neutralisiert.

Die Kondensation der Dichlor-bzw. Difluorverbindungen (4), (7) oder (10) mit den Verbindungen (5), (3) oder (6), wobei die Kombinationen (4) + (5), (7) + (5) und (10) + (3) und (10) + (6) infrage kommen, wird gleichfalls in wäßriger Phase, bei 0° bis 50° und im schwach sauren bis neutralen pH-Bereich durchgeführt, wobei vorzugsweise die freiwerdende Salzsäure oder Flußsäure mit den oben genannten Basen neutralisiert wird.

Im allgemeinen wird man die Kondensationstemperatur bei der Umsetzung von Cyanurfluorid bzw. den Difluortriazinen (4), (7) und (10) niedriger wählen als bei den entsprechenden Chlortriazinen

Die Amine (5) mit B = CO oder $SO_2$ erhält man nach bekannten Verfahren beispielsweise durch Acylierung von Aminen der Formel (11)

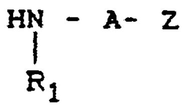

(11)

mit den Nitroverbindungen der Formel

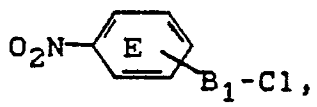

(12)

worin $B_1$ = CO oder $SO_2$, zu den Kondensationsprodukten der Formel

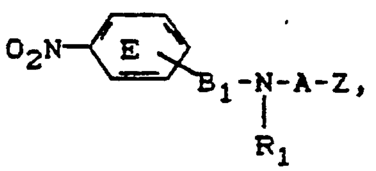

(13)

aus denen nach Reduktion der Nitrogruppe beispielsweise mit katalytisch erregten Wasserstoff Amine (5) erhalten werden

Eine weitere Variante zur Herstellung von Aminen (5) besteht darin, daß man zunächst von Aminen der Formel

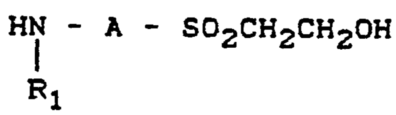

(11a)

ausgeht und diese durch Acylierung mit den Säurechloriden (12) oder Verbindungen der Formel

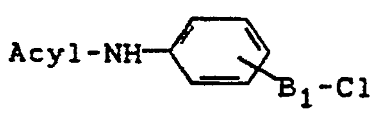

(14)

kondensiert und daraus durch Reduktion der Nitrogruppe oder Verseifung des Acylrestes (vorzugsweise Acetyl) Amine der Formel

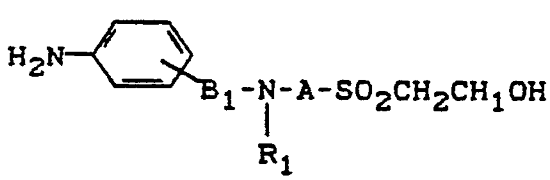

herstellt.

Diese können gleichfalls nach bekannten Verfahren - zum Beispiel Sulfatierung durch Eintragen in

konzentrierte Schwefelsäure - in Amine der Formel

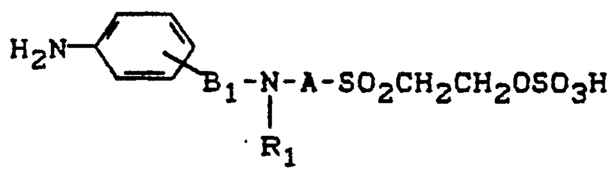

(16)

überführt werden.

Amine (5) mit B = NHCO erhält man durch Umsetzung der Nitrophenylisocyanate

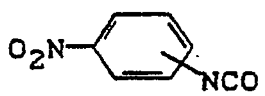

(17)

mit den Aminen (11) und anschließender Reduktion der Nitrogruppe.

Amine (5) mit B = CO und E substiuiert durch COOH erhält man durch Kondensation von Aminen (11) mit 4-Nitrophthalsäureanhydrid und anschließender Reduktion der Nitrogruppe.

Beispiele für Säurechloride (12) sind:

2-, 3- oder 4-Nitrobenzoylchlorid 2-, 3- oder 4-Nitrobenzolsulfochlorid
5-Nitro-2-methyl- oder -2-chlor- oder -2-methoxybenzoylchlorid
5-Nitro-2-methyl- oder -2-chlor- oder -2-methoxy-benzol-sulfochlorid

Beispiele für Säurechloride (14) sind:

3-Acetylaminobenzoylchlorid
4-Acetylaminobenzolsulfochlorid

Beispiele für Isocyanate (17) sind:

3-Nitrophenylisocyanat
4-Nitrophenylisocyanat

Beispiele für Amine (11) sind:

1-Aminobenzol-2-, -3- oder -4-β-sulfatoäthylsulfon,
1-Aminobenzol-3-β-phosphatoäthylsulfon, 1-Amino-4-methyl-benzol-3-β-sulfatoäthylsulfon, 1-Aminobenzol-3-β-chloräthylsulfon, 1-Amino-4-methoxybenzol-3-β-sulfatoäthylsulfon,
1-Aminobenzol-4-β-sulfatoäthylsulfon-2-sulfonsäure,
1-Aminobenzol-5-sulfatoäthylsulfon-2-sulfonsäure,
1-Aminobenzol-5-β-sulfatoäthylsulfon-2,4-disulfonsäure,
1-Aminonapthalin-4-β-sulfatoäthylsulfon,
1-Amino-2,5-dimethoxybenzol-4-β-sulfatoäthylsulfon,
1-Aminobenzol-4-β-sulfatoäthylsulfon-2-carbonsäure,
1-Aminobenzol-5-β-sulfatoäthylsulfon-2-carbonsäure,
1-Amino-2-methoxybenzol-4-β-sulfatoäthylsulfon,
1-Amino-2-chlorbenzol-4-β-sulfatoäthylsulfon,
1-Amino-2-methoxybenzol-5-β-sulfatoäthylsulfon,
2-Aminonaphthalin-8-β-sulfatoäthylsulfon,
2-Aminonaphthalin-8-β-sulfatoäthylsulfon-6-sulfonsäure,
1-Amino-2,5-dimethoxybenzol-4-vinylsulfon,
1-Amino-2-methoxy-5-methylbenzol-4-β-sulfatoäthylsulfon,
1-Amino-2,5-diäthoxybenzol-4-β-sulfatoäthylsulfon,
1-Amino-2-brombenzol-4-β-sulfatoäthylsulfon,
1-Amino-brombenzol-4-vinylsulfon,
1-Aminobenzol-5-vinylsulfon-2,4-disulfonsäure,
1-Aminobenzol-5-β-phosphatoäthylsulfon-2,4-disulfonsäure,
1-Aminobenzol-5-β-chloräthylsulfon-2,4-disulfonsäure,
2-Aminonaphthalin-8-β-phosphatoäthylsulfon-6-sulfonsäure,
2-Aminonaphthalin-8-vinylsulfon-6-sulfonsäure,

1-Amino-2-methoxy-5-methylbenzol-4-β-chloräthylsulfon,
2-Aminophenol-4-β-sulfatoäthylsulfon,
1-Aminobenzol-3- oder -4-vinylsulfon,
1-Amino-2-hydroxybenzol-4-β-sulfatoäthylsulfon,
1-Aminobenzol-5-vinylsulfon-2-sulfonsäure.

Die neuen Farbstoffe geben auf Cellulose- sowie natürlichen und synthetischen Polyamidmaterialien klare Färbungen. Sie zeichnen sich durch hohe Farbstärke aus.

Als wasserlösliche Reaktivfarbstoffe finden die neuen Farbstoffe bevorzugtes Interesse für das Färben von hydroxyl- und amidgruppenhaltigen Textilmaterialien, insbesondere von Materialien aus nativer und regenerierter Cellulose sowie synthetischen Polyamid-und Polyurethanfasern, Wolle und Seide.

Die genannten Materialien werden nach den für wasserlösliche Reaktivfarbstoffe allgemein bekannten und in der Technik üblichen Verfahren gefärbt oder bedruckt. Man erhält dann licht- und naßechte brillante Färbungen und Drucke.

Bei den Temperaturangaben in den Beispielen handelt es sich um 0° C. Die Formeln der wasserlöslichen Reaktivfarbstoffe in der Beschreibung und in den Beispielen sind die der freien Säuren. Isoliert und angewandt werden die Farbstoffe im allgemeinen in Form ihrer Akalisalze, insbesondere der Lithium-, Natrium-oder Kaliumsalze.

Die in den Beispielen angegebenen Farbkennzahlen beziehen sich auf Colour Index Hue Indication Chart (Indicator Numbers).

Beispiel 1

30,2 g 4-Amino-2-methoxy-5-sulfo-acetessigsäureanilid (hergestellt nach Beispiel 1 der Deutschen Offenlegungsschrift 2 632 812) werden in 500 ml Wasser gelöst und auf 0° abgekühlt. Man setzt 18,5 g fein gepulvertes Cyanurchlorid zu und neutralisiert die freiwerdende Salzsäure durch Zutropfen von Lithiumhydroxidlösung. Nach beendeter Kondensation setzt man die aus 48,3 g 2-Amino-3,6,8-trisulfonaphthalin erhaltene Suspension der Diazoverbindung hinzu und kuppelt bei 0 - 5° und im pH-Bereich von 5,5-6. Wenn die Kupplung beendet ist, gibt man 40,0 g 1-(3′-Aminobenzoylamino)-benzol-3-β-sulfatoethylsulfon (Aminkomponente) zu und erwärmt auf 40° , wobei man einen pH von 5-6 durch Zutropfen von verdünnter Sodalösung einhält. Nach Austausch des zweiten Chloratoms wird der Farbstoff durch Einstreuen von Kochsalz abgeschieden. Nach dem Absaugen, Trocknen und Mahlen erhält man ein gelbes Farbstoffpulver, das sich leicht in Wasser mit gelber Farbe löst.

Der Farbstoff färbt Baumwolle nach einem der für Reaktivfarbstoffe üblichen Verfahren grünstichig gelb. Farbkennzahl 1. Er entspricht der Formel

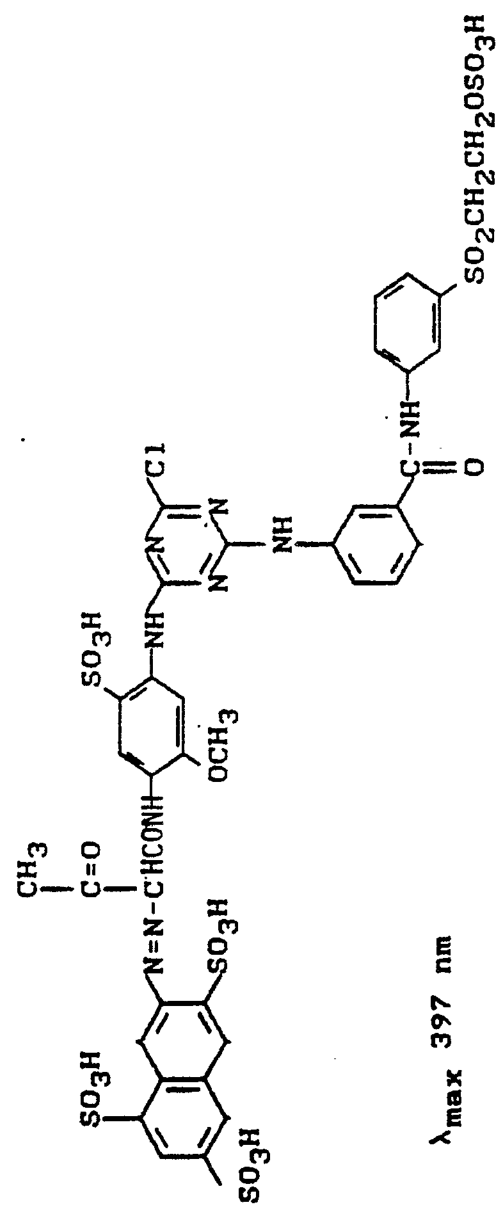


Beispiel 2

30,2 g 4-Amino-2-methoxy-5-sulfo-acetessigsäureanilid werden in 500 ml Eiswasser gelöst. Man tropft bei 0° 13,5 g Trifluortriazin ein und hält durch Zutropfen von Lithiumhydroxidlösung einen pH von 5 bis 6. Wenn sich keine freie Aminogruppe mehr nachweisen läßt, gibt man die aus 48,3 g 2-Amino-3,6-8-trisulfonaphthalin erhaltene Suspension der Diazoverbindung zu und kuppelt bei 0 bis 2° im pH-Bereich von 5,5-6. Nach beendeter Kupplung gibt man 40,0 g 1-(3′-Amino-benzoylamino)benzol-3-β-sulfatoethylsulfon zu und läßt die Temperatur auf 15° ansteigen, wobei man einen pH von 5-6 durch Zutropfen von verdünnter Sodalösung erhält. Nach Austausch des zweiten Fluoratoms wird der Farbstoff ausgesalzen, abgesaugt, getrocknet (70° im Trockenschrank) und gemahlen. Der Farbstoff färbt Baumwolle nach einem der für Reaktivfarbstoffe üblichen Färbeverfahren grünstichig gelb. Farbkennzahl 1. Die Struktur des Farbstoffs ist identisch mit dem von Beispiel 1 mit Ausnahme des Fluoratoms anstelle des Chloratoms am Triazin.

Nach den Angaben von Beispiel 1 oder 2 erhält man weitere wertvolle Farbstoffe, die Baumwolle

grünstichig gelb färben, wenn man die in Spalte 1 genannten Diazokomponenten und die in Spalte 2 aufgeführten Aminkomponenten einsetzt.

| Beispiel | Diazokomponente | Aminkomponente | Halogen am Triazin |
|---|---|---|---|
| 3 | 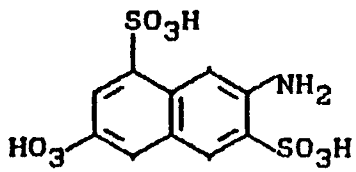 | 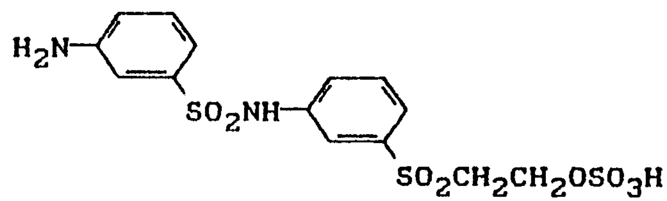 | Cl |
| 4 | " | " | F |
| 5 | " | 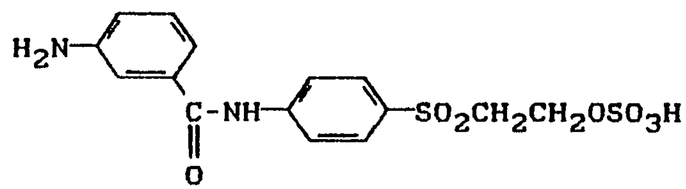 | Cl |
| 6 | " | " | F |
| 7 | 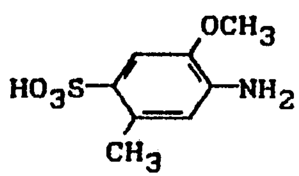 | " | Cl |
| 8 | " | " | F |

| Beispiel | Diazokomponente | Aminkomponente | Halogen am Triazin |
|---|---|---|---|
| 9 | 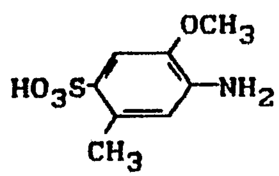 | 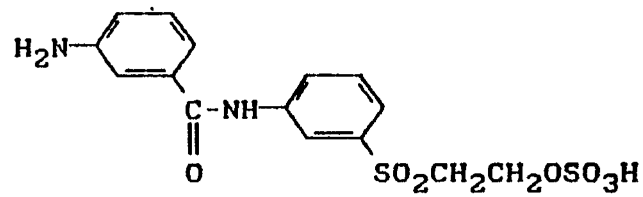 | Cl |
| 10 | " | " | F |
| 11 | 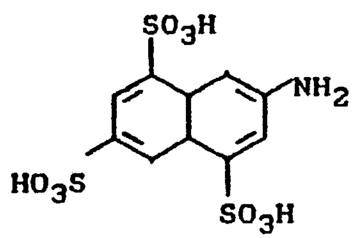 | 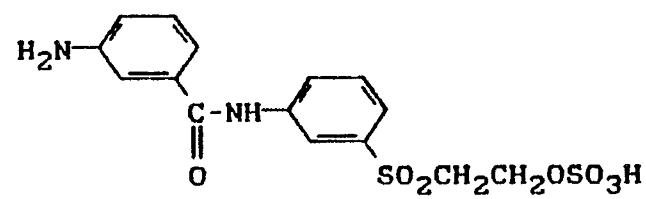 | Cl |
| 12 | " | " | Cl |
| 13 | 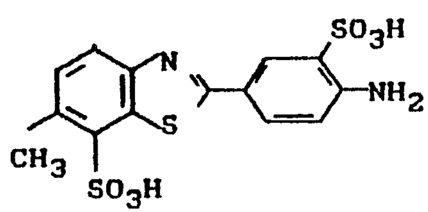 | " | Cl |
| 14 | " | " | F |

| Beispiel | Diazokomponente | Aminkomponente | Halogen aus Triazin |
|---|---|---|---|
| 15 | 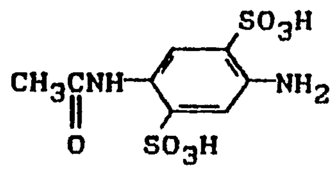 | 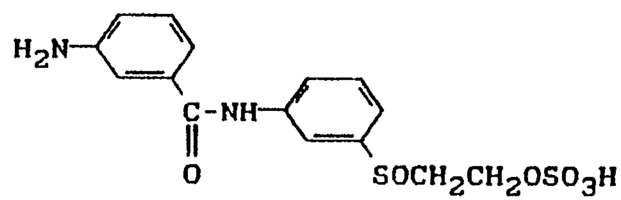 | Cl |
| 16 | " | " | F |
| 17 | 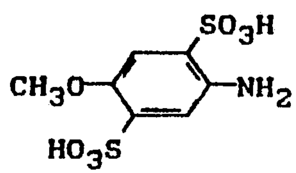 | " | Cl |
| 18 | " | " | F |
| 19 | 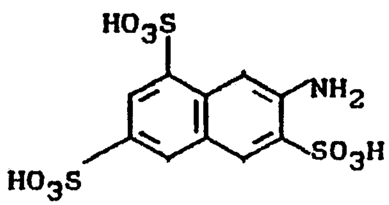 | 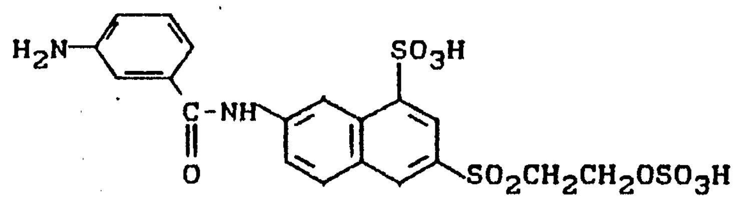 | Cl |
| 20 | " | " | F |

## Ansprüche

1. Reaktivfarbstoffe der Formel

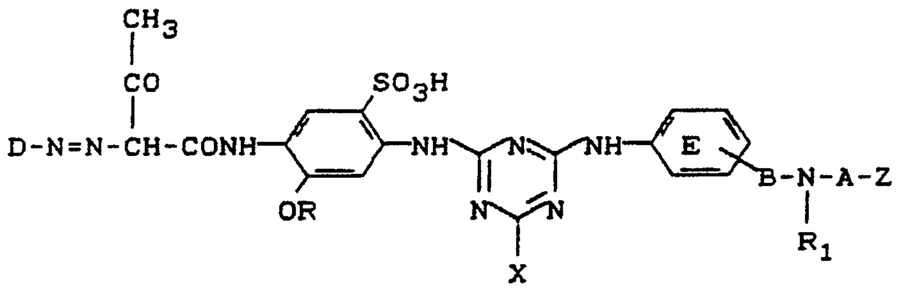 (1)

worin

D = durch $C_1$-$C_4$-alkyl, $C_1$-$C_4$-alkoxy, Phenoxy, $C_1$-$C_4$-alkylcarbonylamino, Benzoylamino, Carboxybenzoylamino, Sulfophenylazo oder Sulfonaphthylazo substituiertes sulfogruppenhaltiges Phenyl, oder Di-bzw. Trisulfonaphthyl oder

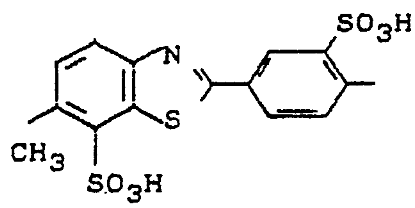

X = F, Cl, gegebenenfalls substituierter Pyridinium-Rest (Substituenten insbesondere gegebenenfalls substituiertes $C_1$-$C_4$-Alkyl, COOH, $SO_3H$, CN, Carbonamid)

R = $CH_3$, $C_2H_5$

B = Brückenglied, insbesondere CO, $SO_2$ oder NHCO

$R_1$ = H oder gegebenenfalls substituiertes $C_1$-$C_4$-alkyl

A = gegebenenfalls substituiertes Phenylen oder Naphthylen

Z = $SO_2CH=CH_2$ oder $SO_2CH_2CH_2Y$, wobei Y eine unter alkalischen Bedingungen abspaltbare Gruppe bedeutet und der Benzolring E substituiert sein kann.

2. Farbstoffe aus Anspruch 1 mit R = $CH_3$, B = CO,

$R_1$ = H, A = 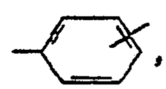, Z = $-SO_2CH_2CH_2OSO_3H$

oder $-SO_2CH=CH_2$ und Ring E unsubstituiert

3. Farbstoffe des Anspruchs 1 mit

D = 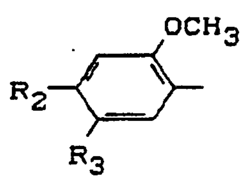

, worin $R_2$ oder $R_3$
eine Sulfogruppe bedeutet und der andere Substituent $R_2$ oder $R_3$ für $CH_3$, $OCH_3$, $C_2H_5$-, $OC_2H_5$- oder H steht;

D = 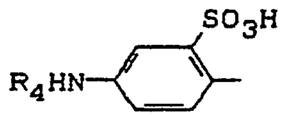

, worin
$R_4$ Acetyl, Propionyl, Maleinyl oder Succinyl bedeutet;
oder

D = 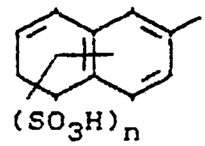

worin n = 2 oder 3.

4. Farbstoffe der Formel

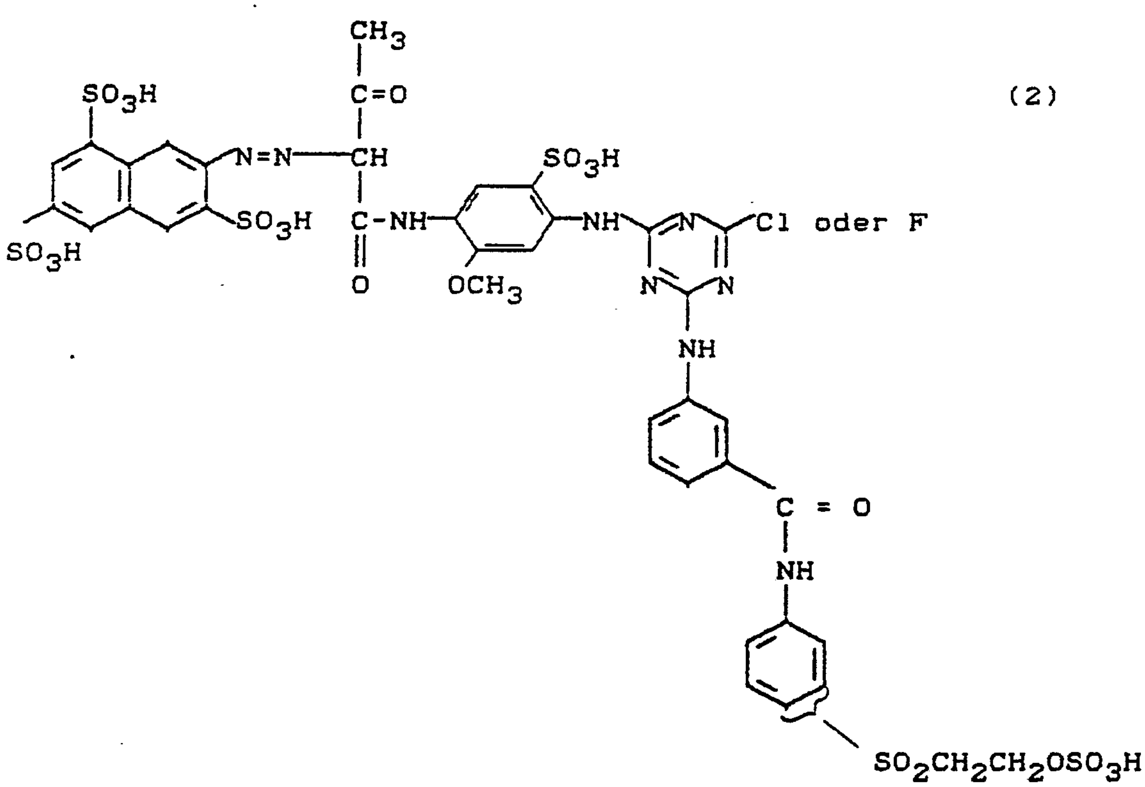

(2)

Europäisches Patentamt

# EUROPÄISCHER RECHERCHENBERICHT

Nummer der Anmeldung

EP 90 10 8776

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 267 524 (SUMITOMO) * Anspruch 1; Beispiel 29; Seite 7, Formel (K) * ----- | 1-4 | C 09 B 62/085<br>C 09 B 62/51 |

| RECHERCHIERTE SACHGEBIETE (Int. Cl.5) |
|---|
| C 09 B |

Der vorliegende Recherchenbericht wurde für alle Patentansprüche erstellt

| Recherchenort | Abschlußdatum der Recherche | Prüfer |
|---|---|---|
| DEN HAAG | 30-07-1990 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)